# EUROPÄISCHE PATENTSCHRIFT

(11) **EP 3 012 065 B1**
(45) Veröffentlichungstag und Bekanntmachung des Hinweises auf die Patenterteilung: **15.07.2020**
(21) Anmeldenummer: 14189863.5
(22) Anmeldetag: 22.10.2014
(51) Int. Cl.: B23Q 11/00, A61C 13/00

(54) **Dental-Werkzeugmaschine**
Dental machine tool
Machine-outil dentaire

(43) Veröffentlichungstag der Anmeldung: 27.04.2016
(73) Patentinhaber: Ivoclar Vivadent AG, 9494 Schaan (LI)
(72) Erfinder: Vadim, Bogdan, 75175 Pforzheim (DE); Cramer von Clausbruch, Sascha, 75417 Mühlacker (DE)
(74) Vertreter: Baronetzky, Klaus

(56) Entgegenhaltungen:
- CN-A- 104 096 696
- DE-A1-102013 005 871
- DE-C2- 19 947 140
- JP-A- S62 284 731
- RU-C1- 2 030 276

## Beschreibung

Die Erfindung betrifft eine Dental-Werkzeugmaschine, gemäß dem Oberbegriff von Anspruch 1.

Es ist seit längerem bekannt, dass bei spanabhebender Bearbeitung erzeugte Späne durch Reibungselektrizität bei der Bearbeitung ionisiert werden. Während metallische Späne häufig in Kontakt mit der Umgebung und/oder nichtbenachbarten Späne geraten und sich hierdurch entladen, gilt dies nicht für Späne aus elektrisch nicht leitenden Materialien wie Glas, Keramik oder Kunststoffen. Die Ionisation ist aber auch bei der Bearbeitung schlecht leitender Materialien wie Holz oder graphitverstärkten Kunststoffen, also Kunststoffen mit Einlagerung von elektrischen Leitern, zu beobachten.

Um die Spanabfuhr zu verbessern, ist es bereits bekanntgeworden, einen Luftdruckschlauch mit einer Elektrode auszustatten, die die Mündung des Schlauchs innen umgibt und sich um einen Bohrer erstreckt, der das nichtleitende oder schlechtleitende Material bearbeitet. Demgegenüber wird die Bereitstellung einer einfachen Elektrode in dem Schlauch als weniger wirksam angesehen.

Aus der JP S 62 284 731 A ist eine Harz-Bearbeitungsmaschine unter Verwendung von negativ ionisierter Luft bekannt.

Ein Nachteil der bekannten Lösung ist es, dass durch das Vorsehen der spiraligen Elektrode der Bohrerwechsel stark beeinträchtigt wird. Um die Wirksamkeit zu verbessern, ist bei einer derartigen Lösung eine Hochspannung um 15 kV vorgesehen.

Eine derartige Lösung lässt sich beispielsweise der US 5,667,565 entnehmen.

Das Vorsehen einer derartig hohen Spannung ist gerade beim Werkzeugwechsel jedoch gefährlich, so dass es nicht verwunderlich ist, dass sich diese Lösung, die speziell für den Flugzeugbau vorgesehen war, nicht durchgesetzt hat.

Ferner sind zahlreiche Versuche bekannt geworden, die Spanabfuhr von Spänen, die durch Bohrer oder andere spanabhebende Werkzeuge erzeugt werden, zu verbessern.

So ist vorgeschlagen worden, die Ionisierung der zugeführten Luft von der eigentlichen Zufuhr zu trennen und insofern mit ionisierter Raumluft die Deionisation der Späne zu gewährleisten. Es hat sich jedoch gezeigt, dass hierfür eine sehr hohe Luftleistung erforderlich ist, die die Realisierung deutlich verteuert und insbesondere auch geräuschintensiv ist.

Ferner wurde bereits vorgeschlagen, die für die Ionisation der Luft verwendeten Spannung durch eine spezielle Wechselspannung zu ersetzen, um die erforderlichen Spannungen auf ungefährliche Werte zu reduzieren.

Insbesondere bei stark elektrisch isolierenden Materialien wie PMMA verbleiben jedoch häufig Ablagerungen von Spänen an dem Werkstück oder dem Werkstückhalter, oder aber in oder an dem diese umgebenden Raum.

Aus der Druckschrift JP S62 284731 A ist ein Verfahren zur Beseitigung der Reibungselektrizität in einer mechanischen Bearbeitungsanlage und zur Verhinderung der Haftung von Spänen an den übrigen Komponenten bekannt.

DE 10 2013 005 871 A1 offenbart ein numerisch gesteuertes Bearbeitungszentrum, insbesondere ein mehrachsiges Bohr- und Fräszentrum, mit einer mehrachsigen, eine vertikale Spindel aufweisenden Bohr- und Fräsvorrichtung.

CN 104 096 696 A offenbart ein Verfahren und eine Vorrichtung zur spanabhebenden Bearbeitung eines Rohlings und zur Sammlung der entstehenden Späne.

Daher liegt der Erfindung die Aufgabe zu Grunde, eine Dental-Werkzeugmaschine gemäß dem Oberbegriff von Anspruch 1 zu schaffen, die hinsichtlich der Reinigungswirkung von Spanablagerungen verbessert ist, ohne dass eine besonders hohe Geräuschentwicklung erzeugt würde, und wobei insbesondere auch Spanablagerungen in den Räumen oder Flächen, die dem Werkstück benachbart sind, vermieden werden.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass ein Gehäuse vorgesehen ist, an dem die Luftdüse angebracht ist. Die Luftdüse kann auch in dem Gehäuse angebracht sein, ist jedoch über entsprechende mechanische Mittel erfindungsgemäß mit dem Innenraum des Gehäuses verbunden. Hierdurch ist zunächst gewährleistet, dass ein eng umgrenzter Raum vorliegt, der in überraschender Weise die Ionisierung wesentlich erleichtert und den Ionisationswirkungsgrad deutlich verbessert. Daher lassen sich in erfindungsgemäß vorteilhafter Ausgestaltung auch wesentlich geringere Spannungen wie beispielsweise weniger als 8 kV realisieren, ohne dass die Ionisation unzureichend wäre.

Auch wenn das Gehäuse öffenbar ist - und damit eine Berührung der Luftdüse bzw. der Abdeckung der Elektrode grundsätzlich möglich ist -, ist die Sicherheit beispielsweise gegenüber einer versehentlichen Berührung von außen - beispielsweise über ein leitendes Medium wie Wasser - deutlich reduziert. Zudem ist in vorteilhafter Ausgestaltung ein hoher Vorwiderstand von beispielsweise 1 MΩ vorgesehen, der einen etwaigen Strom bei Kontakt mït Lebewesen auf ein ungefährliches Maß von weniger als 10 mA begrenzt. Darüber hinaus ist in vorteilhafter Ausgestaltung eine Abdeckung der Elektrode und/oder der Elektroden vorgesehen, die einen Berührungsschutz gewährleistet.

Erfindungsgemäß ist es darüber hinaus vorgesehen, dass zum einen eine Luftdüse auf den Bereich gerichtet ist, der besonders spanablagerungsintensiv oder -relevant ist, also das Werkstück, dem Werkstoffhalter, die Werkzeugbank, und/oder eine Scheibe einer Frontklappe der Werkzeugmaschine. Dies allein reicht jedoch nicht aus, und darüber hinaus ist es erfindungsgemäß vorgesehen, die mindestens eine Elektrode für die Erzeugung eines elektrischen Feldes so auszurichten, dass die auf die Seite des Werkstücks oder des Werkstückhalters gerichtet ist, auf welcher das Werkzeug das Werkstück spanabhebend bearbeitet.

Die Elektrode ionisiert also gezielt die Luft, die der Bearbeitungsseite nahe ist. Überraschend lässt sich die richtige Kombination dieser Merkmale eine derart vollständige Ionisation der Luft und damit Deionisation der Späne realisieren, dass diese auch nicht dazu neigen, sich in Ecken des Gehäuses, die an sich ablageintensiv wären, abzulagern, so dass durch die vollständige Deionisation der Kunststoffspäne, insbesondere der PMMA-Späne, diese von einer Unterdruckquelle ohne weiteres und ablagefrei abgeführt werden können.

Besonders günstig ist es, die Ionisation der Luft mit einer gepulsten symmetrischen Rechteck-Wechselspannung vorzunehmen. Hierdurch werden in gleichmäßiger Verteilung Luftkationen und Luftanionen erzeugt, und aufgrund der elektrostatischen Anziehung entladen die Luftkationen die negativ geladenen Späne, also gleichsam die Spananionen und die Luftkanionen entladen umgekehrt die Spankationen.

Erfindungsgemäß günstig ist auch hier die unmittelbare Nähe der Elektroden zu der Bearbeitungsseite, da dann die Neigung der Luftionen, einander zu entladen, auf ein Minimalmaß reduziert ist.

Die Ausrichtung der erfindungsgemäßen Elektroden ist bevorzugt so, dass die Elektrode in einer Spitze ausläuft, die in der Luftdüse versenkt aufgenommen ist. Diese Spitze ist dann in der gewünschten Weise ausgerichtet. Die Elektrode ist bevorzugt als sich in Luftströmungsrichtung um mehrere Zentimeter erstreckende Fläche ausgebildet. Beispielsweise kann sie hülsenförmig realisiert sein, wobei die Luft innen und außen an der Hülse entlang strömt und intensiv in Kontakt mit der Elektrode gerät.

Durch geeignete strömungstechnische Maßnahmen wie Strömungsrippen, die für eine Verwirbelung der Luft innerhalb der Düse, also vor dem Austritt, sorgen, lässt sich die Neigung sämtlicher Luftmoleküle, mit der Elektrode in Kontakt zu geraten und damit sich zu ionisieren, weiter erhöhen.

Bevorzugt ist die Verwirbelung anschließend an den Kontakt der Elektrode umgehend abgeschlossen, so dass die Luft laminar aus der Düse hinausströmt und dann in stetiger Strömung dem Bearbeitungsbereich des Werkstücks ionisiert zugeleitet wird.

Erfindungsgemäß besonders günstig ist es, dass gerade auch hochisolierende PMMA-Späne erfindungsgemäß davon abgehalten werden können, sich an Innenecken des Gehäuses abzulagern. Dies liegt darin begründet, dass die Deionisation der Späne unmittelbar an den Ort der Entstehnung erfolgt, so dass verhindert wird, dass ionisierte Späne sich außerhalb des Bearbeitungsbereichs befinden und dementsprechend zur Haftung an Oberflächen neigen.

In erfindungsgemäß vorteilhafter Ausgestaltung ist insofern eine laminare kontinuierliche, aber wenig intensive Luftströmung vorgesehen, die es ermöglicht, ausreichend Zeit für die Deionisation der Späne bereitzustellen. Dies lässt sich in günstiger Weise durch einen Luftschleier erzeugen, der durch eine Mehrzahl, beispielsweise mindestens drei, Luftdüsen erzeugt wird, die , durch die in Reihe vorliegende Anordnung von Werkzeugbank, Werkstückhalter und Werkstück gebildet ist. Die Luftdüsen können bevorzugt auch gegeneinander versetzt sein, beispielsweise w inkelversetzt oder seitenversetzt, um eine möglichst flächige und gezielte laminare Luftanströmung mit geringem Druck zu gewährleisten.

So kann es beispielsweise ausreichen, mit einem Druck von lediglich 0,1 bar oder einer Luftströmung von lediglich 20 l/min die Bearbeitungsbereiche anzuströmen, um dennoch die vollständige Spanabfuhr zu gewährleisten.

In erfindungsgemäß vorteilhafter Ausgestaltung ist es vorgesehen, die Luftzufuhr pulsierend auszugestalten. Hierbei lässt sich in Doppelfunktion zum einen eine Aufwirbelung der Späne - während des Luftimpulses - erzielen, zum anderen in der Ruhephase eine bessere Ionisation. Mit dieser überraschend einfachen Maßnahme lässt sich der Ionisationswirkungsgrad der Späne weiter verbessern. Bevorzugt liegt hier das Impuls/Pausen-Verhältnis zwischen 1 zu 2 und 1 zu 10 und bevorzugt etwa bei 1 zu 3.

Gemäß einer weiteren bevorzugten Ausgestaltung ist es vorgesehen, eine Mehrzahl von Düsen anzuordnen, von denen mindestens eine aus das Werkstück und/oder den Werkstückhalter und/oder das Werkzeug und/oder die Werkzeugband und/oder die Scheibe der Frontklappe gerichtet ist und diese Düsen getrennt zu regeln.

Hierdurch könnten weiter entfernte Bereiche mit höherem Druck beaufschlagt und besser gereinigt werden.

Besonders günstig ist es bei der Realisierung von mehreren lufttechnisch parallelen - wenn auch nicht exakt parallel ausgerichteten - Düsen, dass auch Flächen des Bearbeitungsraums deionisiert werden können. Hierdurch ergibt sich ebenfalls eine verbesserte Reinigungswirkung, da die insofern geladenen Flächen die entgegengesetzt geladenen Späne ebenfalls deionisieren.

Für die Regelung der Deionisierungswirkung ist es möglich, die Luftzufuhr und/oder die Spannung an den Deionisierdüsen zu regeln. Insbesondere lässt sich auch eine Kombination dieser beiden Parametern für die Regelung ausnutzen.

Bevorzugt erfolgt eine Absaugung eines vergleichsweise kompakten Fräsraums in einer Raumecke, beispielsweise hinten/unten. Durch die beträchtliche Entfernung zwischen den oder der Luftdüse und dem Sauganschluss entsteht eine gleichmäßige Luftabfuhr mit guter Reinigungswirkung für die Haftspäne.

Weitere Vorteile, Einzelheiten und Merkmale ergeben sich aus der nachfolgenden Beschreibung von zwei Ausführungsbeispielen der Erfindung anhand der Zeichnungen:
Es zeigen:
- Fig. 1: eine schematische Seitenansicht einer erfindungsgemäßen Dental-Werkzeugmaschine in einer Ausführungsform, die als Dental-Fräsmaschine ausgebildet ist;
- Fig. 2: eine gegenüber der Ausführungsform gemäß Fig. 1 modifizierte Ausführungsform, jedoch in einer anderen Seitenansicht;
- Fig. 3: eine perspektivische Ansicht eines Ausschnitts aus der Dental-Fräsmaschine gemäß den Figuren 1 und 2; und
- Fig. 4: eine teilweise aufgebrochene perspektivische Ansicht einer Dental-Fräsmaschine gemäß den Figuren 1 bis 3.

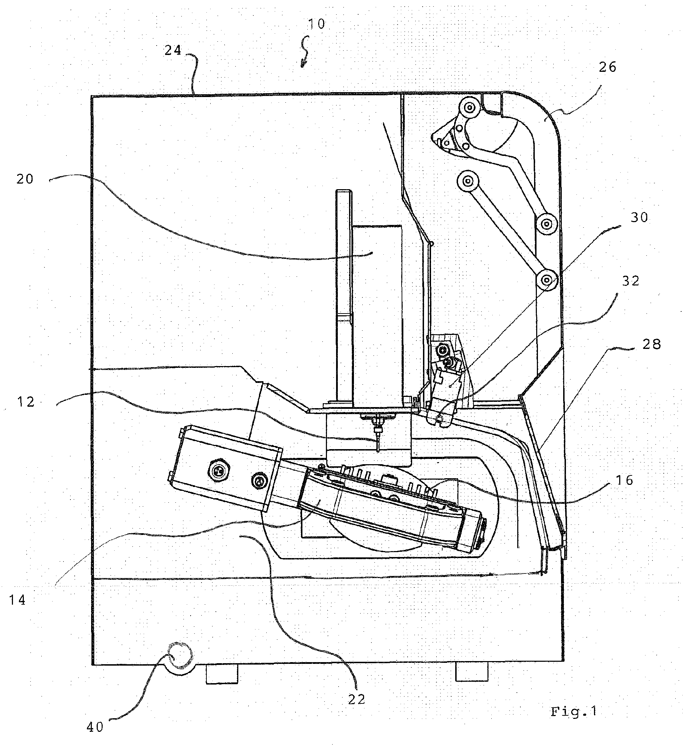

Fig. 1 zeigt eine Dental-Fräsmaschine 10 mit einem Werkzeug 12, das im dargestellten Ausführungsbeispiel als Frässpindel ausgebildet ist, einem Werkstückhalter 14, in den ein nicht dargestelltes Werkstück einspannbar, und eine Werkzeugbank 16, die im Falle des hier beschriebenen Ausführungsbeispiels an dem Werkstückhalter angebracht ist.

In an sich bekannter Weise ist sowohl das Werkzeug mit dem Werkzeugantrieb 20 mehrachsig bewegbar, als auch der Werkstückhalter 14. Im dargestellten Ausführungsbeispiel ist das Werkzeug zweiachsig und der Werkstückhalter dreiachsig bewegbar, so dass eine Fünfachs-Dental-Fräsmaschine vorliegt.

Es versteht sich, dass an Stelle dessen auch beliebige andere Werkzeugmaschinen hier realisierbar sind, beispielsweise auch vierachsige oder sechsachsige Dental-Fräsmaschinen, Bohrmaschinen, Schleifmaschinen, oder beliebige andere Werkzeugmaschinen, mit denen eine spanabhebene Bearbeitung vorgenommen wird.

Die Dental-Fräsmaschine 10 weist einen Fräsraum 22 auf, der gegenüber dem Gehäuse 24 der Dental-Fräsmaschine 10 im übrigen deutlich kleiner ist, beispielsweise mit einem Zehntel bis einem Drittel des Volumens. Das Gehäuse 24 der Dental-Fräsmaschine 10 weist ferner eine Tür 26 auf, die mit einem Fenster 28 ausgestattet ist, das leicht schrägstehend oben einwärts geneigt angeordnet ist und einen Blick auf das Werkstück während der Bearbeitung durch die Dental-Fräsmaschine 10 ermöglicht.

Erfindungsgemäß weist die Dental-Fräsmaschine 10 eine Luftdüse 30 auf, die in dem dargestellten Ausführungsbeispiel schräg von oben/seitlich auf das in dem Werkstückhalter 14 eingespante Werkstück gerichtet ist, genauer gesagt, auf den Bearbeitungsbereich, an welchem das Werkzeug 12 das Werkstück bearbeitet. Die Ausrichtung bezieht sich auf die Ausströmachse der Düse, wobei mindestens der Ausströmkonus der Düse auch bei der fünfachsigen Bewegung von Werkstück und Werkzeug 12 gegeneinander stets den Bearbeitungsbereich abdeckt.

In dem dargestellten Ausführungsbeispiel ist die Luftdüse 30 gehäusefest montiert, wobei es sich versteht, dass an Stelle dessen auch eine bewegliche Montage möglich ist, die die Luftdüse 30 mit dem Werkzeug 12 - oder aber mit dem Werkstückhalter 14 - mitführt.

Erfindungsgemäß weist die Luftdüse 30 Elektroden auf, von denen eine Elektrode 32 aus Fig. 1 schematisch ersichtlich ist. Die Elektrode 32 erstreckt sich innen durch die Luftdüse 30 an der Luftleitung entlang, also dort parallel zur Ausströmungsrichtung bevorzugt über die gesamte Länge der Düse, im Beispielsfall über etwa 4cm. Ihr gegenüberliegend, also um 180° versetzt, ist eine weitere Elektrode vorgesehen, und die Elektroden sind an einen Spannungsgenerator angeschlossen, der hier nicht dargestellt ist, der eine elektrische Spannung erzeugt, die zwischen 4 und 8 kV regelbar ist. Die elektrische Spannung ist bevorzugt eine Wechselspannung, und zwar eine Rechteck-Wechselspannung, und bevorzugt ist eine der Elektroden - nämlich die nicht dargestellte Elektrode - ist mit Masse verbunden.

Die Elektrode 32 ist versenkt in der Luftdüse 30 angeordnet, so dass insofern ein Berührungsschutz vorliegt. Zudem ist die Elektrode 32 über einen Vorwiderstand von mindestens einem Megaohm mit dem Spannungsgenerator verbunden.

Obwohl in Fig. 1 lediglich eine Luftdüse 30 dargestellt ist, versteht es sich, dass tatsächlich eine Mehrzahl von Elektroden vorgesehen sind. Diese sind nebeneinander bzw. hintereinander angebracht, also oberhalb der Zeichnungsebene bzw. unterhalb der Zeichnungsebene und je schräg zueinander ausgerichtet. Die bevorzugte Schrägstellung der Luftdüsen hängt stark von dem Aufweitkonus der aus den Luftdüsen 30 austretenden Luftströmung ab und beträgt insbesondere 5° und 30°.

Bevorzugt ist mindestens eine der Luftdüsen auch schräg seitlich auf die Scheibe oder das Fenster 28 ausgerichtet, so dass eine Luftströmung entsteht, die an dem Fenster 28 entlang strömt.

Die Luftdüsen erstrecken sich im Wesentlichen parallel zur Werkzeugspindel 12 von oben auf das nicht dargestellte Werkstück, das in dem Werkstückhalter 14 eingespannt gehalten ist. Dies ermöglicht eine direkte uns gezielte Luftbeaufschlagung mit ionisierter Luft an der Stelle, an der Späne entstehen.

Bei der Bearbeitung durch die Werkzeugmaschine 10 entstehen Späne. Wenn beispielsweise eine Kunststoffscheibe, wie eine Scheibe aus PMMA, bearbeitet wird, entstehen durch die Reibungselektrizität geladene Späne. Diese haften an der in den Werkstückhalter eingespannten Scheibe, die das Werkstück bildet, aber auch an dem Fräser als dem Werkzeug 12 und insbesondere auch an den Schäften der in dem in der Werkezeugbank 16 aufgenommenen Werkzeuge.

Durch die gezielte Beaufschlagung der deionisierenden Luft aus den Luftdüsen 30 werden nun die so dort anhaftenden Späne deionisiert und lassen sich dann von der Luftströmung in einem gleich auch leicht entfernen.

Dies gilt auch für Späne, die an dem Fenster 28 anhaften; auch dort erfolgt sowohl die Deionisierung als auch die Strömungsmitnahme.

In einer Raumecke des Fräsraums 22 ist ein Unterdruckanschluss 40 vorgesehen, der der Absaugung der Späne dient. Die deionisierten Späne werden zusammen mit der von den Luftdüsen 30 zugeführten Luft über den Unterdruckanschluss 40 abgesaugt und aus dem Fräsraum 22 insofern vollständig entfernt.

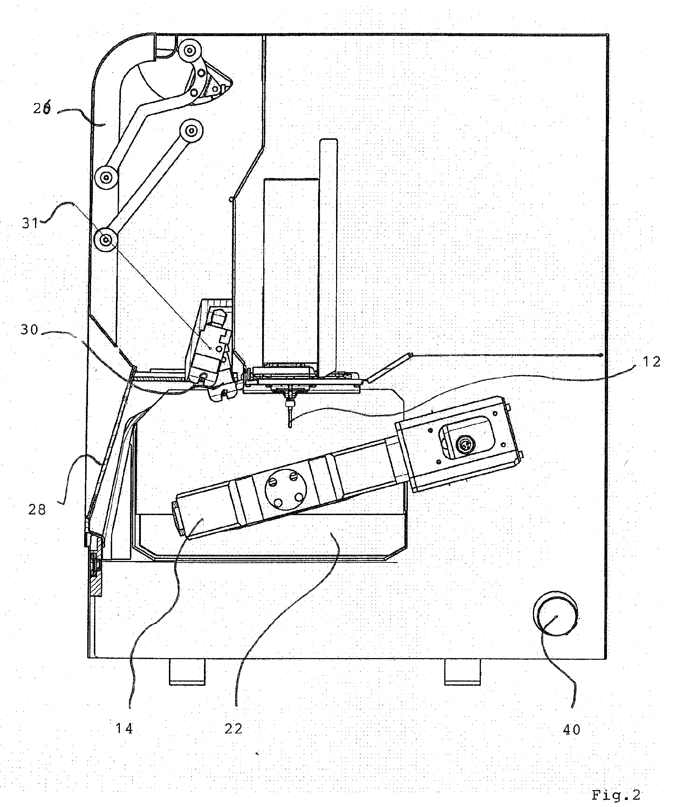

In Fig. 2 ist eine modifizierte Ausführungsform gegenüber der Ausführungsform in Fig. 1 ersichtlich. Der Unterdruckanschluss 40 ist hier an einer etwas anderen Stelle angeordnet, und zwei Luftdüsen 30 und 31 erstrecken sich wie ersichtlich ist etwas schräg zueinander.

Die Strömungsachse der Luftdüse 30 ist in der dargestellten Werkzeugpostion auf einen Bereich knapp neben der Bearbeitungsposition der Werkzeugspindel 12 an dem nicht dargestellten Werkstück gerichtet, und zwar in Richtung der Tür 26 bzw. des Fensters 28. In dem dargestellten Ausführungsbeispiel erstreckt sich der Werkstückhalter 14 - und damit das dort eingespannte Werkstück - senkrecht zur Ausströmungsrichtung der Luftdüse 30. Der Werkstückhalter 14 wird während der Bearbeitung regelmäßig bewegt, so dass insofern lediglich eine Momentanpostition angedeutet ist. Eine leicht schräge Anströmung des Werkstücks durch die Luftdüse 30 ist bevorzugt, um eine bessere Abfuhrluftströmung für die Späne bereitzustellen. Hier reicht ein Schrägstellungswinkel von 10° oder 20° gegenüber der in Fig. 2 dargestellten Position aus.

Es ist auch möglich, eine Mehrzahl von Unterdruckanschlüssen 40 bereitzustellen, beispielsweise rechts hinten und links hinten, jeweils unten in dem Fräsraum 22.

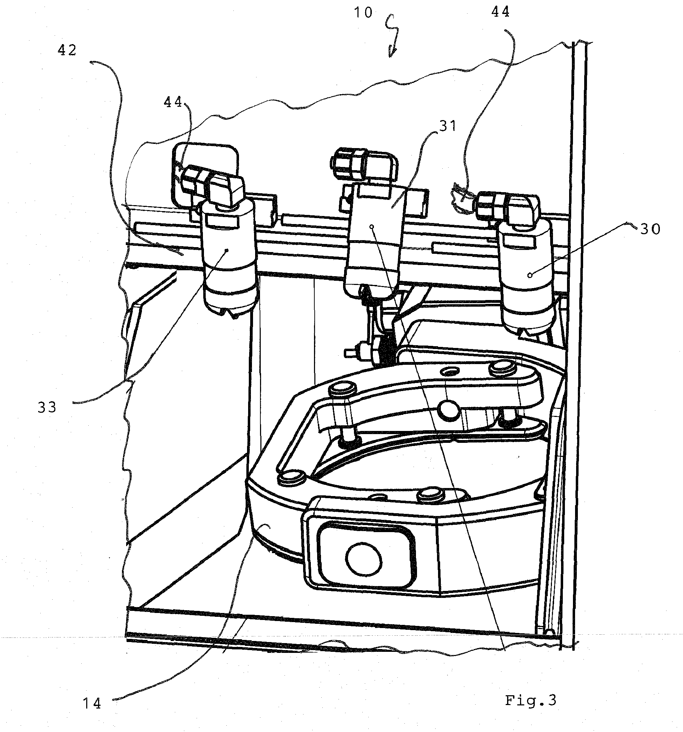

Aus Fig. 3 ist eine weitere Ausgestaltung einer erfindungsgemäßen Werkzeugmaschine 10 ersichtlich. Diese Ausführung zeigt drei Luftdüsen 30, 31 und 33, die nebeneinander an einem Luftdüsenhalter 42 gelagert sind und schräg zueinander ausgerichtet sind. Der Abstand der Luftdüsen 30, 31 und 33 ist so gewählt, dass jedenfalls der Bewegungsbereich des in dem Werkstückhalter 14 eingespannten Werkstücks während der spanabhebenden Bearbeitung von dem aufsummierten Ausströmkonus der Luftdüsen 30, 31 und 33 abgedeckt ist.

Die Luftdüsen 30, 31 und 33 weisen je Luftanschlüsse 44 auf, die je mit Schläuchen mit einer Überdruckquelle verbunden sind. Bevorzugt ist der Druck der Überdruckquelle regelbar und kann beispielsweise zwischen 0,1 bar und 1,0 bar betragen, beispielsweise etwa 0,4 bar.

In einer alternativen Ausgestaltung ist es vorgesehen, mit einem vergleichsweise hohen Druck mit 5 bar bis 7 bar zu arbeiten. Bei diesem Druck ist die Wurfweite der emittierten Luft wesentlich höher, und auch entfernte Bereiche der Fräsmaschine, also solche, die beispielsweise 30 cm von der betreffenden Düse beabstandet sind, lassen sich gut erreichen. Bei derartigen Hochdruckdüsen ist eine Verlängerung des lonisationskanals empfehlenswert, um trotz der höheren Ausströmungsgeschwindigkeit eine sichere Ionisierung der Luft zu gewährleisten.

In einer Ausführungsform der erfindungsgemäßen Dental-Werkzeugmaschine ist es vorgesehen die Elektroden mit einer Betriebsspannung von 7 kV zu beaufschlagen, und zwar mit einem Impuls-/Pausen-Verhältnis zwischen 0,5 zu 1 und 2 zu 1 mit einer Rechteckwelle. Die Stromstärke zwischen den Elektroden bzw. zwischen der lonisationselektrode und Masse ist auf 0,5 mA begrenzt, so dass auch bei vergleichsweise feuchter Luft keine unzulässig hohe Stromstärke entsteht.

Der Bereich der optimalen Luftbeaufschlagung des Werkstücks bzw. Werkzeugs liegt im Abstand zwischen 50 mm und 250 mm vor der Düse.

Ein weiterer Vorteil der erfindungsgemäßen Lösung ist es, dass eine vergleichsweise geringe Lautstärke des Reinigungsluftstroms besteht; bei einem Luftdruck von 1 bar beträgt dieser lediglich 68 db in 60 cm Entfernung neben der Düse gemessen.

In einer modifizierten Ausgestaltung ist es vorgesehen, mit etwas geringerem Druck zu arbeiten und die Stromstärke auf 20 µA zu begrenzen, und in einer dritten Ausführungsform, mit einer geringeren Spannung zu arbeiten, beispielsweise 4 kV und die Spannung auf 2,5 mA zu begrenzen.

Auch der Unterdruck des Unterdruckanschlusses kann regelbar sein, beträgt aber bevorzugt etwa 500 mbar.

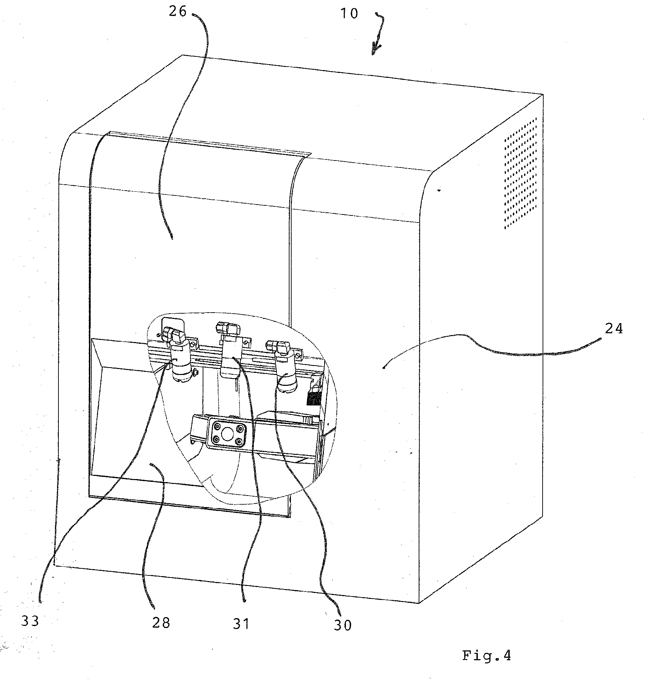

Aus Fig. 4 ist eine Dental-Fräsmaschine 10 in einer Ausführungsform gemäß Fig. 3 ersichtlich, wobei hier sowohl das Fenster 28 als auch die Tür 26, aber auch das Gehäuse 24 teilweise aufgebrochen dargestellt sind und den Blick auf die Düsen 30, 31 und 33 ermöglichen.

Die Luftdüse 31 ist bei dieser Ausführungsform so ausgerichtet, dass ihre aufgeweitete Luftströmung schräg seitlich auf das Fenster 28 trifft und die dort etwaig anhaftenden Späne deionisiert und damit mitführt, so dass sie über den Druckanschluss 40 abgeleitet werden können.

Die zu bearbeitenden Werkstoffe umfassen sämtliche insbesondere im Dentalbereich zu bearbeitende Werkstoffe und schwerpunktmäßig die Kunststoffe PMMA, Polyuretan, Polyamid, PEEK sowie Composite.

Es sind aber auch Wachse und kunststoffmodifizierte Wachse entsprechend bearbeitbar.

## Patentansprüche

1. Dental-Werkzeugmaschine, insbesondere Dental-Fräsmaschine (10), mit einem, insbesondere über eine Werkzeugbank (16), wechselbaren Werkzeug (12) und einem Werkstückhalter (14) für die Aufnahme eines Werkstücks wie eines Dentalrohlings aus Keramik, Komposit oder Kunststoff wie PMMA, und mit einem Gehäuse (24), das während der Bearbeitung durch die Werkzeugmaschine verschließbar ist, und mit einem Unterdruckanschluss an dem Gehäuse (24), **dadurch gekennzeichnet, dass** eine Mehrzahl von an oder in dem Gehäuse (24) angebrachten Luftdüsen (30, 31, 33) vorgesehen ist, wobei mindestens eine der Luftdüsen (30, 31, 33) auf das Werkstück und/oder den Werkstückhalter (14) und/oder das Werkzeug (12) und/oder die Werkzeugbank (16) und/oder eine Scheibe einer Frontklappe der Werkzeugmaschine gerichtet ist, und mit mindestens einer Elektrode (32) für die Erzeugung eines elektrischen Feldes im Bereich der Düse oder vor dieser ausgestattet ist, und dass mindestens eine Düse mit der mindestens einen Elektrode auf die Seite des Werkstücks oder des Werkstückhalters (14), auf welcher das Werkzeug (12) das Werkstück spanabhebend bearbeitet, gerichtet ist, wobei für eine Regelung der Deionisierungswirkung die Luftzufuhr und/oder Spannung an den Luftdüsen regelbar ist.

2. Dental-Werkzeugmaschine nach Anspruch 1, **dadurch gekennzeichnet, dass** die mindestens eine Elektrode (32) der Luftdüsen an einen Spannungsgenerator angeschlossen ist, der eine elektrische Spannung von mehr als 1 kV, insbesondere zwischen 4 und 8 kV, erzeugt.

3. Dental-Werkzeugmaschine nach Anspruch 1 oder 2, **dadurch gekennzeichnet, dass** ein Spannungsgenerator, der an die mindestens eine Elektrode (32) angeschlossen ist, eine Wechselspannung, insbesondere eine Rechteck-Wechselspannung, erzeugt.

4. Dental-Werkzeugmaschine nach einem der vorhergehenden Ansprüche, **dadurch gekennzeichnet, dass** die Werkzeugmaschine eine Tür (26) aufweist, über welche die Werkstücke und Werkzeuge (12) einbringbar und entnehmbar sind, und dass die mindestens eine Luftdüse (30) mit der mindestens einen Elektrode (32) oberhalb der Tür (26), insbesondere dieser benachbart, angeordnet ist.

5. Dental-Werkzeugmaschine nach Anspruch 4, **dadurch gekennzeichnet, dass** die Dental-Werkzeugmaschine ein Fenster (28) in dem Gehäuse (24) oder gegebenenfalls in einer Tür (26) aufweist, und dass mindestens eine der Luftdüsen (30) mit der mindestens einer Elektrode (32) mit ihrer Ausströmrichtung auf das Fenster (28) gerichtet ist.

6. Dental-Werkzeugmaschine nach Anspruch 4 oder 5, **dadurch gekennzeichnet, dass** die Luftdüsen der Mehrzahl von Luftdüsen (30, 31, 33), welche mit mindestens je einer Elektrode (32) ausgestattet sind, nebeneinander angeordnet sind und sich quer über eine gegebenenfalls mit einer Tür (26) ausgestattete Vorderseite des Gehäuses (24) der Dental-Werkzeugmaschine erstrecken, insbesondere über mehr als die Hälfte der Breite der Werkzeugmaschine.

7. Dental-Werkzeugmaschine nach einem der vorhergehenden Ansprüche, **dadurch gekennzeichnet, dass** mindestens eine der Luftdüsen (30, 31, 33) mit zwei Elektroden ausgerüstet ist und mindestens eine der Luftdüsen (30, 31, 33) eingerichtet ist Luft abzugeben, insbesondere eine der Luftdüsen (30, 31, 33)auf das Werkstück und/oder das Werkzeug (12) gerichtet ist.

8. Dental-Werkzeugmaschine nach einem der vorhergehenden Ansprüche, **dadurch gekennzeichnet, dass** die mindestens eine Elektrode (32) der mindestens einen Luftdüse der Mehrzahl von Luftdüsen (30, 31, 33) Teil eines Ionisators ist, und dass sich zwischen der mindestens einen Luftdüse (30, 31, 33) und dem Unterdruckanschluss des Gehäuses (24) ein Luftströmungskanal erstreckt und dass der lonisator auf den Luftströmungskanal gerichtet ist, insbesondere stromauf des Werkzeugs/Werkstücks.

9. Dental-Werkzeugmaschine nach einem der vorhergehenden Ansprüche, **dadurch gekennzeichnet, dass** mindestens eine der Luftdüsen (30) auf Schäfte der Werkzeuge in der Werkzeugbank (16) gerichtet ist.

10. Dental-Werkzeugmaschine nach einem der vorhergehenden Ansprüche, **dadurch gekennzeichnet, dass** jede Luftdüse (30, 31, 33), die mit mindestens einer Elektrode (32) ausgestattet ist, zwei einander gegenüberliegende Elektroden aufweist, die sich insbesondere teilringförmig um einen Ausströmkanal erstrecken, der sich zwischen 0,5 cm und 5 cm vor der Luftdüse (30,31, 33) ausbildet und dass die Elektroden den Luftstrom über eine Strecke von mehr als 1 cm, insbesondere mindestens 5 cm, deionisieren.

11. Dental-Werkzeugmaschine nach einem der vorhergehenden Ansprüche, **dadurch gekennzeichnet, dass** die Mehrzahl von Luftdüsen (30, 31, 33) an eine Luftsteuereinheit angeschlossen sind, die die Luftströmung über die Zeit betrachtet ändert und insbesondere Luftimpulse abgibt.

12. Dental-Werkzeugmaschine nach einem der vorhergehenden Ansprüche, **dadurch gekennzeichnet, dass** über die Luftdüsen (30, 31, 33), die mit ionisierenden Elektroden (32) ausgestattet sind, eine auf das Werkstück, den Werkstückhalter (14), das Werkzeug (12) und/oder die Werkzeugbank (16) gerichtete definierte Luftströmung erzeugt wird, die die durch die spanabhebende Bearbeitung der Werkzeugmaschine entstandenen Späne aus dem Entstehungsbereich abführt und dem Unterdruckanschluss zuleitet.

13. Dental-Werkzeugmaschine nach Anspruch 8, **dadurch gekennzeichnet, dass** mindestens zwei Elektroden (32) der mindestens einen Luftdüse der Mehrzahl von Luftdüsen (30, 31, 33), Teil des Ionisators sind, und sich voneinander beabstandet über einen wesentlichen Teil des Gehäuses (24), insbesondere über mehr als ein Drittel des Gehäuses (24), bevorzugt mehr als die Hälfte des Gehäuses (24) erstrecken und durch Anlegen einer insbesondere pulsierenden Wechselspannung eine Raumdeionisation der in dem Gehäuse (24) strömenden Luft und/oder eine Deionisation der Oberflächen von Werkstück, Werkstückhalter (14), Werkzeug (12) und/oder Fenster (28) und der durch die spanabhebende Bearbeitung erzeugten Späne bereitstellt.

14. Dental-Werkzeugmaschine nach einem der vorhergehenden Ansprüche, **dadurch gekennzeichnet, dass** mehrere Luftdüsen (30, 31, 33) quer zur Frontklappe der Dental Werkzeugmaschine in mindestens einer Reihe angeordnet sind, insbesondere gegeneinander versetzt und/oder winkelversetzt.

15. Dental-Werkzeugmaschine nach einem der vorhergehenden Ansprüche, **dadurch gekennzeichnet, dass** die von dem Unterdruckanschluss erzeugte abgesaugte Luftmenge größer als die von den Luftdüsen (30, 31, 33) zugeführte Luftmenge ist und das Gehäuse (24) in seinem Innenraum gegenüber der Umgebungsluft unter Unterdruck steht.

16. Dental-Werkzeugmaschine nach einem der vorhergehenden Ansprüche, **dadurch gekennzeichnet, dass** der Unterdruck an dem Unterdruckanschluss 50 mbar bis 500 mbar im Vergleich zu der Umgebungsluft beträgt und der Überdruck der Überdruckquelle, an die mindestens eine der Luftdüsen (30, 31, 33) angeschlossen ist, mehr als 0,1 bar, insbesondere etwa 0,4 bar, beträgt.

17. Dental-Werkzeugmaschine nach einem der vorhergehenden Ansprüche, **dadurch gekennzeichnet, dass** die von der Überdruckquelle zugeführte Luftmenge zwischen 10 und 150 l/min beträgt, insbesondere zwischen 40 und 90l/min, und besonders bevorzugt zwischen 60 und 70 l/min.

18. Dental-Werkzeugmaschine nach Anspruch 16 oder 17, **dadurch gekennzeichnet, dass** der Überdruck der Überdruckquelle, an die die Mehrzahl der Luftdüsen (30, 31, 33) angeschlossen ist, regelbar ist.

19. Dental-Werkzeugmaschine nach einem der vorhergehenden Ansprüche, **dadurch gekennzeichnet, dass** die mindestens eine der Luftdüsen (30, 31, 33) in dem Gehäuse (24) dem Unterdruckanschluss im Wesentlichen diametral gegenüberliegt, so dass der Luftströmungskanal der durch diese Luftdüse (30, 31, 33) und den Unterdruck erzeugten Luftströmung sich diagonal quer durch das Gehäuse (24) erstreckt.

## Claims

1. A dental machine tool, especially a dental milling machine (10), comprising a tool (12) especially exchangeable via a tool bench (16), and a workpiece holder (14) for receiving a workpiece such as a dental blank made of ceramic, composite or plastic such as PMMA, and comprising a housing (24), which is closable during machining by the machine tool, and comprising a vacuum connection on the housing (24), **characterized in that** a plurality of air nozzles (30, 31, 33) mounted on or in the housing (24) are provided, wherein at least one of the air nozzles (30, 31, 33) is directed towards the workpiece and/or the workpiece holder (14) and/or the tool (12) and/or the tool bench (16) and/or a shim of a front flap of the machine tool, and is provided with at least one electrode (32) for generating an electric field in the region of the workpiece or in front thereof, and **in that** at least one nozzle, with the at least one electrode, is directed towards that side of the workpiece or of the workpiece holder (14), where the tool (12) processes the workpiece by machining, wherein the air supply and/or voltage at the air nozzles is adjustable to adjust the deionization effect.

2. The dental machine tool according to claim 1, **characterized in that** the at least one electrode (32) of the air nozzles is connected to a voltage generator which generates an electrical voltage of more than 1 kV, especially between 4 and 8 kV.

3. The dental machine tool according to claim 1 or 2, **characterized in that** a voltage generator, which is connected to the at least one electrode (32) generates an alternating voltage, especially a square-wave alternating voltage.

4. The dental machine tool according to one of the preceding claims, **characterized in that** the machine tool comprises a door (26) through which the workpieces and tools (12) are introducible and removable, and **in that** the at least one air nozzle (30), with the at least one electrode (32), is arranged above the door (26), especially adjacent thereto.

5. The dental machine tool according to claim 4, **characterized in that** the dental machine tool comprises a window (28) in the housing (24) or, if appropriate, in a door (26), and **in that** at least one of the air nozzles (30), with the at least one electrode (32), is directed towards that window (28) with its outflow direction.

6. The dental machine tool according to claim 4 or 5, **characterized in that** the air nozzles of the plurality of air nozzles (30, 31, 33), which each are provided with at least one electrode (32), are arranged next to each other, and extending transversely across a front side of the housing (24) of the dental machine tool, which front side optionally is provided with a door (26), and is provided with the door especially across more than half the width of the machine tool.

7. The dental machine tool according to one of the preceding claims, **characterized in that** at least one of the air nozzles (30, 31, 33) is provided with two electrodes, and at least one of the air nozzles (30, 31, 33) is designed to emit air, especially one of the air nozzles (30, 31, 33) is directed towards the workpiece and/or the tool (12).

8. The dental machine tool according to one of the preceding ciaims, **characterized in that** the at least one electrode (32) of the at least one air nozzle of the plurality of air nozzles (30, 31, 33) is part of an ionizer, and **in that** an air flow channel extends between the at least one air nozzle (30, 31, 33) and the vacuum connection of the housing (24), and **in that** the ionizer is directed towards the air flow channel, especially upstream of the tool/workpiece.

9. The dental machine tool according one of the preceding claims, **characterized in that** at least one of the air nozzles (30) is directed towards shanks of the tools in the tool bench (16).

10. The dental machine tool according to one of the preceding claims, **characterized in that** each air nozzle (30, 31, 33), which is provided with at least one electrode (32), comprises two electrodes opposite to each other, which especially extend in the form of a partial ring around an outflow channel which is formed-between 0.5 cm and 5 cm in front of the air nozzle (30, 31, 33), and **in that** the electrodes deionize the air flow across a distance of more than 1 cm, especially at least 5 cm.

11. The dental machine tool according to one of the preceding claims, **characterized in that** the plurality of air nozzles (30, 31, 33) are connected to an air control unit, which changes the air flow over time and especially emits air pulses.

12. The dental machine tool according to one of the preceding claims, **characterized in that** a defined air flow directed to the workpiece, the workpiece holder (14), the tool (12) and/or the tool bench (16) is generated through the air nozzles (30, 31, 33), which are provided with ionizing electrodes (32), which air flow discharges the chips produced during machining using the machine tool from the area of origin and conveys them to the vacuum connection.

13. The dental machine tool according to claim 8, **characterized in that** at least two electrodes (32) of the at least one air nozzle of the plurality of air nozzles (30, 31, 33) are part of the ionizer and are spaced apart from each other across a substantial part of the housing (24), especially more than one third of the housing (24), preferably extending more than the halves of the housing (24) and, by applying an especially pulsating alternating voltage, providing spatial deionization of the air flowing in the housing (24) and/or deionization of the surfaces of the workpiece, workpiece holder (14), tool (12) and/or window (28) and of the chips produced by machining.

14. The dental machine tool according to one of the preceding claims, **characterized in that** a plurality of air nozzles (30, 31, 33) are arranged transversely to the front flap of the dental machine tool in at least one row, especially offset and/or angularly offset in relation to each other.

15. The dental machine tool according to one of the preceding claims, **characterized in that** the extracted amount of air produced by the vacuum connection is greater than the amount of air supplied by the air nozzles (30, 31, 33), and the housing (24) is under negative pressure in its interior with respect to the ambient air.

16. The dental machine tool according to one of the preceding claims, **characterized in that** the negative pressure at the vacuum connection is 50 mbar to 500 mbar as compared to the ambient air and the overpressure of the overpressure source to which at least one of the air nozzles (30, 31, 33) is connected is more than 0.1 bar, especially about 0.4 bar.

17. The dental machine tool according to one of the preceding claims, **characterized in that** the air volume supplied by the overpressure source is between 10 and 150 l/min, especially between 40 and 90 l/min, and particularly preferably between 60 and 70 l/min.

18. The dental machine tool according to claim 16 or 17, **characterized in that** the overpressure of the overpressure source, to which the majority of the air nozzles (30, 31, 33) are connected, is adjustable.

19. The dental machine tool according to one of the preceding claims, **characterized in that** the at least one of the air nozzles (30, 31, 33) in the housing (24) is located substantially diametrically opposite the vacuum connection, so that the air flow channel of the air flow generated by that air nozzle (30, 31, 33) and the vacuum extends diagonally across the housing (24).

## Revendications

1. Machine-outil dentaire, en particulier fraiseuse dentaire (10), avec un outil (12) échangeable, en particulier par l'intermédiaire d'une banque d'outils (16), et un porte-pièce (14) pour recevoir une pièce à usiner telle qu'un lingotin dentaire en céramique, en composite ou en matière plastique telle que le PMMA, et avec un boîtier (24), qui peut être fermé pendant l'usinage par la machine-outil, et avec un raccord à vide sur le boîtier (24), **caractérisé en ce que** plusieurs buses à air (30, 31, 33) sont prévues montées sur ou dans le boîtier (24), où au moins une des buses à air (30, 31, 33) est dirigé sur la pièce à usiner et/ou le porte-pièce (14) et/ou l'outil (12) et/ou le banc d'outils (16) et/ou une fenêtre d'un volet frontal de la machine-outil, et est équipé d'au moins une électrode (32) pour générer un champ électrique dans la région de la buse ou devant celle-ci, et **en ce qu'**au moins une buse avec ladite au moins une électrode est dirigée vers le côté de la pièce à usiner ou du porte-pièce (14) sur lequel l'outil (12) est en train d'usiner la pièce par enlèvement de copeaux, où l'alimentation en air et/ou la tension au niveau des buses d'air peut être régulée pour régler l'effet de déionisation.

2. Machine-outil dentaire selon la revendication 1, **caractérisée en ce qu'**au moins une électrode (32) des buses d'air est reliée à un générateur de tension qui génère une tension électrique de plus de 1 kV, en particulier entre 4 et 8 kV.

3. Machine-outil dentaire selon la revendication 1 ou 2, **caractérisée en ce qu'**un générateur de tension connecté à ladite au moins une électrode (32) génère une tension alternative, en particulier une tension alternative rectangulaire.

4. Machine-outil dentaire selon l'une des revendications précédentes, **caractérisée en ce que** la machine-outil présente une porte (26), par laquelle les pièces à usiner et les outils (12) peuvent être introduits et retirés, et **en ce que** ladite au moins une buse d'air (30) est disposée avec ladite au moins une électrode (32) au-dessus de la porte (26), en particulier adjacente celle-ci.

5. Machine outil dentaire selon la revendication 4, **caractérisée en ce que** la machine-outil dentaire présente une fenêtre (28) dans le boîtier (24) ou éventuellement dans une porte (26), et **en ce qu'**au moins une des buses d'air (30) avec ladite au moins une électrode (32) est dirigée avec sa direction de sortie vers la fenêtre (28).

6. Machine-outil dentaire selon la revendication 4 ou 5, **caractérisée en ce que** les buses d'air de la pluralité de buses d'air (30, 31, 33), qui sont chacune équipées d'au moins une électrode (32), sont disposées les unes à côté des autres et s'étendent transversalement sur une face avant du boîtier (24) de la machine-outil dentaire, qui est éventuellement équipée d'une porte (26), en particulier sur plus de la moitié de la largeur de la machine-outil.

7. Machine-outil dentaire selon l'une des revendications précédentes, **caractérisée en ce qu'**au moins une des buses d'air (30, 31, 33) est équipée de deux électrodes et au moins une des buses d'air (30, 31, 33) est disposée de manière à émettre de l'air, en particulier une des buses d'air (30, 31, 33) est dirigée vers la pièce à usiner et/ou l'outil (12).

8. Machine-outil dentaire selon l'une des revendications précédentes, **caractérisée en ce que** ladite au moins une électrode (32) de ladite au moins une buse à air de la pluralité de buses à air (30, 31, 33) fait partie d'un ioniseur, et **en ce qu'**un canal d'écoulement d'air s'étend entre ladite au moins une buse à air (30, 31, 33) et le raccord à vide du boîtier (24), et **en ce que** l'ioniseur est dirigé vers le canal d'écoulement d'air, en particulier en amont de l'outil/pièce à usiner.

9. Machine-outil dentaire selon l'une des revendications précédentes, **caractérisée en ce qu'**au moins une des buses d'air (30) est dirigée vers les tiges des outils dans la banque d'outils (16).

10. machine-outil dentaire selon l'une des revendications précédentes, **caractérisée en ce que** chaque buse d'air (30, 31, 33), qui est équipée d'au moins une électrode (32), présente deux électrodes opposées l'une à l'autre, qui s'étendent en particulier sous la forme d'un anneau partiel autour d'un canal de sortie qui est formé entre 0,5 cm et 5 cm devant la buse d'air (30, 31, 33) et **en ce que** les électrodes déionisent le flux d'air sur une distance de plus de 1 cm, en particulier d'au moins 5 cm.

11. Machine-outil dentaire selon l'une des revendications précédentes, **caractérisée en ce que** la pluralité de buses d'air (30, 31, 33) sont connectées à un régulateur d'air qui modifie le flux d'air dans le temps et émet en particulier des impulsions d'air.

12. Machine-outil dentaire selon l'une des revendications précédentes, **caractérisée en ce qu'**un flux d'air défini dirigé sur la pièce à usiner, le porte-pièce (14), l'outil (12) et/ou le banc d'outil (16) est généré par l'intermédiaire des buses d'air (30, 31, 33), qui sont équipées d'électrodes d'ionisation (32), lequel flux d'air enlève les copeaux produits par l'usinage de la machine-outil de la zone d'origine et les transporte vers le raccord à vide.

13. Machine-outil dentaire selon la revendication 8, **caractérisée en ce qu'**au moins deux électrodes (32) de la ou des buses d'air de la pluralité de buses d'air (30, 31, 33) font partie de l'ionisateur et s'étendent espacées l'une de l'autre sur une partie substantielle du boîtier (24), en particulier sur plus d'un tiers du boîtier (24), de préférence sur plus de la moitié du boîtier (24) et permettent, par l'application d'une tension alternative notamment pulsatoire, une déionisation spatiale de l'air circulant dans le boîtier (24) et/ou une déionisation des surfaces de la pièce, du porte-pièce (14), de l'outil (12) et/ou de la fenêtre (28) et des copeaux produits par le processus d'usinage.

14. Machine-outil dentaire selon l'une des revendications précédentes, **caractérisée en ce que** plusieurs buses d'air (30, 31, 33) sont disposées transversalement au volet frontal de la machine-outil dentaire en au moins une rangée, en particulier décalées et/ou décalées angulairement les unes par rapport aux autres.

15. Machine-outil dentaire selon l'une des revendications précédentes, **caractérisée en ce que** la quantité d'air extraite produite par le raccord à vide est supérieure à la quantité d'air fournie par les buses d'air (30, 31, 33) et le boîtier (24) est sous pression négative à l'intérieur par rapport à l'air ambiant.

16. Machine-outil dentaire selon l'une des revendications précédentes, **caractérisée en ce que** la pression négative au niveau du raccord à vide est de 50 mbar à 500 mbar par rapport à l'air ambiant et la surpression de la source de surpression à laquelle au moins une des buses d'air (30, 31, 33) est raccordée est supérieure à 0,1 bar, en particulier environ 0,4 bar.

17. Machine-outil dentaire selon l'une des revendications précédentes, **caractérisée en ce que** la quantité d'air fournie par la source de surpression est comprise entre 10 et 150 1/min, en particulier entre 40 et 90 1/min, et en particulier de préférence entre 60 et 70 1/min.

18. Machine-outil dentaire selon la revendication 16 ou 17, **caractérisée en ce que** la surpression de la source de surpression, à laquelle la majorité des buses d'air (30, 31, 33) sont raccordées, est ajustable.

19. Machine-outil dentaire selon l'une des revendications précédentes, **caractérisée en ce que** ladite au moins une des buses d'air (30, 31, 33) dans le boîtier (24) est situé sensiblement diamétralement opposée à l'orifice de pression négative, de manière que le canal du flux d'air généré par ladite buse d'air (30, 31, 33) et la pression négative s'étend en diagonale à travers le boîtier (24).
